# FASCICULE DE BREVET EUROPEEN

(11) **EP 0 471 066 B1**
(45) Date de publication et mention de la délivrance du brevet: **23.10.1996**
(21) Numéro de dépôt: 91906296.8
(22) Date de dépôt: 01.03.1991
(51) Int. Cl.: G02B 6/30

(54) **PROCEDES DE CONNEXION ENTRE UNE FIBRE OPTIQUE ET UN MICROGUIDE OPTIQUE**
VERBINDUNGSMETHODEN ZWISCHEN EINER OPTISCHEN FASER UND EINEM OPTISCHEN WELLENLEITER
METHODS OF CONNECTION BETWEEN AN OPTICAL FIBRE AND AN OPTICAL MICROGUIDE

(30) Priorité: 01.03.1990 FR 9002575
(43) Date de publication de la demande: 19.02.1992
(73) Titulaire: COMMISSARIAT A L'ENERGIE ATOMIQUE, 75752 Paris Cédex 15 (FR)
(72) Inventeur: DENIS, Hervé, F-38120 Saint-Egrève (FR); GIDON, Pierre, F-38130 Echirolles (FR); VALETTE, Serge, F-38100 Grenoble (FR)
(74) Mandataire: Poulin, Gérard
(86) Numéro de dépôt international: FR9100167
(87) Numéro de publication internationale: WO9113378

(56) Documents cités:
- EP-A- 0 331 332
- EP-A- 0 331 333
- EP-A- 0 331 338
- DE-A- 3 615 519
- PATENT ABSTRACTS OF JAPAN vol. 9, no. 56 (E-302)(1779) 12 mars 1985 & JP-A-59 197 184
- PATENT ABSTRACTS OF JAPAN vol. 6, no. 243 (E-145)(1121) 2 Decembre 1982 & JP-A-57 143 890
- PATENT ABSTRACTS OF JAPAN vol. 9, no. 90 (P.350)(1813) 19 avril 1985 & JP-A-59 218 406
- The Radio and Electronic Engineer, vol.53, no.9, (1983), pages 313-320

## Description

La présente invention concerne deux procédés de connexion entre une fibre optique et un microguide optique.

La fibre optique peut être une fibre monomode ou une fibre multimode.

Le microguide optique est du genre de ceux qui comprennent, sur un substrat, une structure de guidage comportant un coeur appelé "coeur du microguide" et compris entre deux milieux dont les indices de réfraction respectifs sont inférieurs à l'indice de réfraction du coeur du microguide.

Par définition, une structure de guidage est une structure résultant de la superposition de trois milieux, le milieu intermédiaire (le coeur) présentant un indice de réfraction supérieur à celui des deux autres.

Un microguide est un structure de guidage particulière dont l'un au moins des trois milieux constituant la structure de guidage est limité latéralement (par exemple par gravure) de façon à assurer un confinement latéral de la lumière.

On définit alors l'axe du coeur du microguide (correspondant à l'axe du microguide) comme un axe situé à mi-hauteur du milieu formant le coeur, parallèle à l'axe du ou des milieux limités latéralement et contenu dans le même plan que cet axe, ce plan étant perpendiculaire aux plans des couches de la structure de guidage.

En toute rigueur, l'axe du coeur devrait être défini à partir de l'intégrale de recouvrement des modes guidés de la fibre et du microguide, qui doit être maximum.

En pratique, cet axe est toujours très voisin de l'axe géométrique du coeur défini précédemment.

C'est donc ce dernier axe que l'on considérera dans le reste de la description pour plus de simplicité.

Par ailleurs, pour plus de clarté, la description qui suit se réfère à un microguide dont seul le milieu formant le coeur est limité latéralement, étant bien entendu que l'invention s'applique à tous les types de microguides.

En revenant aux deux milieux entre lesquels est compris le coeur du microguide, le milieu supérieur, c'est-à-dire celui qui n'est pas en contact avec le substrat, peut être l'air mais on utilise en général en tant que milieux adjacents au coeur, deux couches de matériaux appropriés ou d'un même matériau approprié qui peut être la silice lorsque le substrat est en silicium.

La présente invention s'applique notamment au domaine de l'optique intégrée.

Dans ce domaine, l'opération de couplage entre une fibre optique monomode ou multimode et un microguide optique joue un rôle important et doit être à la fois :
- efficace, c'est-à-dire conduire à des pertes de connexion ne dépassant pas une valeur de l'ordre de 0,5 à 1 dB,
- rapide et donc, si possible, ne pas nécessiter de micropositionnement de la fibre avant que celle-ci ne soit rendue rigidement solidaire du microguide optique et
- peu coûteuse,
et doit s'intégrer le mieux possible aux autres opérations technologiques conduisant à la fabrication du microguide optique.

La présente invention concerne un procédé susceptible de répondre aux exigences précédentes.

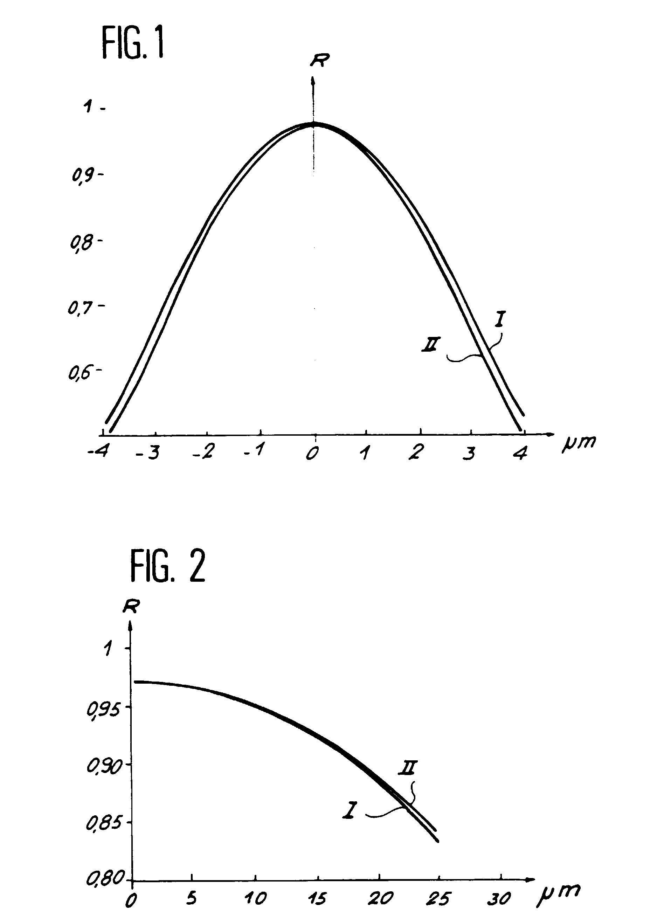

Les figures 1 et 2 illustrent l'importance de l'obtention d'une connexion correcte entre une fibre optique et un microguide optique.

On a pris l'exemple d'une fibre de type STL CW 1505 E dont le coeur a un diamètre de 8 micromètres et qui est utilisée avec une lumière dont la longueur d'onde est égale à 1,55 micromètre.

La figure 1 représente les variations du rendement de couplage R en fonction du désalignement de l'axe optique de la fibre et de l'axe optique du microguide (ce désalignement étant exprimé en micromètres), pour un microguide comportant, entre deux couches de silice, un coeur de silice dopée dont la section transversale a la forme d'un carré de 4,8 micromètres de côté et dont l'indice optique dépasse celui des couches adjacentes d'une valeur égale à 6.10⁻³ (courbe I de la figure 1) ou 7.10⁻³ (courbe II de la figure 1).

La figure 2 représente les variations du rendement de couplage R en fonction de la distance (exprimée en micromètres) entre la fibre optique mentionnée plus haut et un microguide optique comportant, entre deux couches de silice, un coeur de silice dopée dont l'indice optique dépasse de 7.10⁻³ celui des couches adjacentes et dont la section transversale a la forme d'un carré de 5 micromètres de côté (courbe I de la figure 2) ou la forme d'un rectangle de 6 micromètres de long et de 5 micromètres de large (courbe II de la figure 2).

On connaît déjà des procédés de connexion entre une fibre optique et un microguide optique.

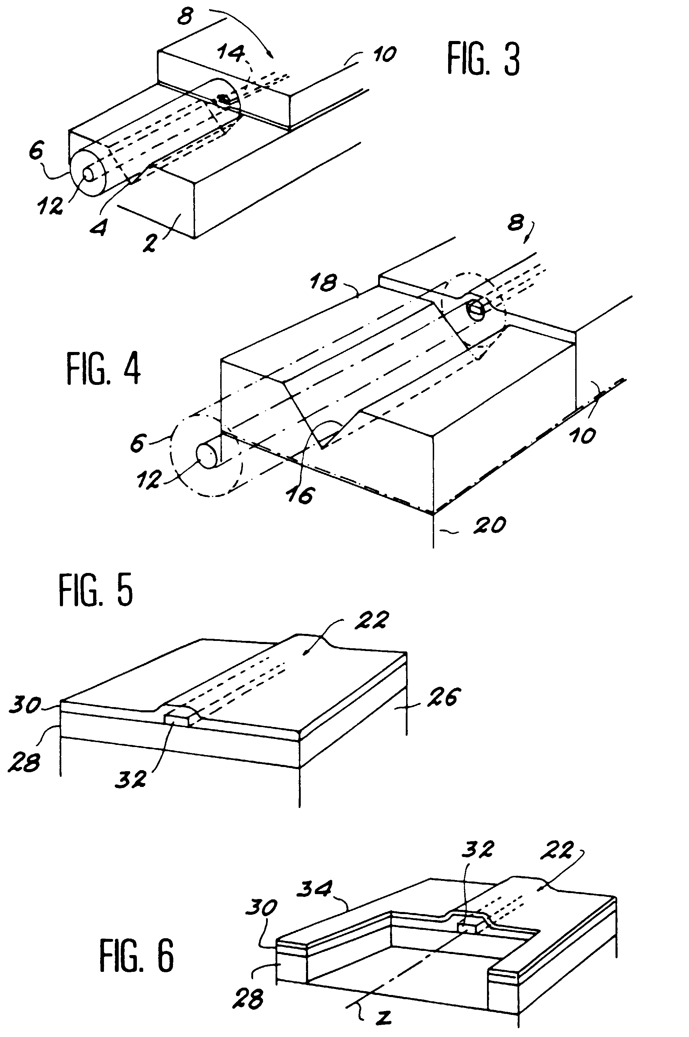

L'un de ces procédés connus est schématiquement illustré sur la figure 3 et consiste d'abord à former, dans un support 2, un logement 4 en forme de V qui est destiné à recevoir la fibre optique 6. Lorsque celle-ci est mise en place dans son logement 4, le microguide 8 est positionné sur le support 2 en regard de la fibre.

Ce microguide comprend par exemple, sur un substrat 10, deux couches de silice entre lesquelles se trouve le coeur du microguide et le positionnement est effectué de façon que le substrat 10 ne soit pas en contact avec le support 2 de sorte que c'est l'une des deux couches de silice qui est en contact avec ce support.

La profondeur du logement 4 en forme de V est telle que l'axe du coeur 12 de la fibre 6, qui est mise en place dans ce logement 4 dépasse de la surface du support 2 et se trouve sensiblement en coïncidence avec l'axe du coeur 14 du microguide optique.

Le positionnement latéral relatif de la fibre optique 6 par rapport au microguide optique 8 s'effectue généralement à l'aide de rails (non représentés) que l'on forme à la fois sur le support 2 et au moins dans la couche de silice en contact avec le support 2.

Ce procédé connu présente l'inconvénient de nécessiter deux supports, à savoir le support 2 proprement dit et le substrat 10 du microguide optique 8.

De plus, compte tenu des contraintes d'alignement, il est très difficile d'obtenir un couplage efficace entre la fibre optique et le microguide optique sans alignement dynamique des deux supports (c'est-à-dire sans micropositionnement du microguide 8 et donc de son substrat 10, par rapport au support 2), d'où un temps de connexion important et un coût élevé de la connexion.

Selon un deuxième procédé connu, schématiquement illustré par la figure 4, la fibre optique 6 est mise en place dans un logement 16 en V réalisé dans un support 18 du genre du support 2, ce support 18 est lui-même mis en place sur un autre support 20 et le microguide 8 est à son tour mis en place sur le support 20 de telle manière que son substrat 10 soit en contact avec ce support 20.

La profondeur du logement 16 est telle que l'axe du coeur de la fibre optique puisse alors être sensiblement aligné avec l'axe du coeur du microguide 8.

Ce second procédé connu est donc encore plus compliqué et plus coûteux que le premier procédé connu, mentionné plus haut, puisqu'il nécessite un support de plus.

La présente invention a pour objet deux procédés de connexion entre une fibre optique et un microguide optique, qui sont plus simples et donc moins coûteux que les procédés connus mentionnés précédemment.

Cette simplification résulte notamment du fait que, dans la présente invention, on n'utilise qu'un seul support, à savoir le substrat sur lequel est réalisé le microguide optique.

On connaît, par le document EP-A-0331332, un procédé de connexion entre une fibre optique et un microguide optique selon le préambule de la revendication 1.

De façon précise, la présente invention a pour objet un procédé de connexion entre une fibre optique et une structure de guidage intégrée à confinement latéral conformément à la revendication 1.

Bien entendu, la zone que l'on élimine de la structure de guidage a une longueur suffisante, par exemple de l'ordre de 100 à 1000 micromètres, pour que la fibre puisse être convenablement maintenue dans le logement formé dans le substrat par gravure de ce dernier.

L'utilisation d'une gravure sèche, dans la présente invention, pour graver ladite partie du substrat, permet de réaliser le logement selon n'importe quelle direction.

De préférence, la structure de guidage est gravée de façon sensiblement anisotrope.

Selon un mode de réalisation préféré du procédé objet de l'invention, la gravure par voie sèche de ladite partie du substrat est de type isotrope. on obtient de ce fait un logement à parois latérales concaves : vu en coupe transversale, ce logement a sensiblement la forme d'un U à branches latérales concaves. On définit ainsi avantageusement, compte tenu de la concavité des parois gravées du substrat, des points d'appui latéraux, pour le positionnement latéral de la fibre, sur les parois de la structure de guidage gravée, ce qui permet un bon centrage de la fibre par rapport au coeur. Par ailleurs, un point d'appui pour le positionnement vertical de la fibre est défini dans le fond du logement formé dans le substrat.

La largeur de la zone éliminée étant égale au diamètre extérieur de la fibre, il n'est pas nécessaire d'effectuer un positionnement dynamique de la fibre optique par rapport au microguide optique, d'où un procédé plus simple que le premier procédé connu mentionné plus haut (qui, lui, nécessite un positionnement dynamique).

Lorsque le substrat est gravé, la structure de guidage peut être légèrement attaquée lorsque la gravure du substrat n'est pas suffisamment sélective par rapport aux matériaux de la structure de guidage : il se produit alors une sur-gravure de cette structure de guidage.

Il convient donc de tenir compte de cette sur-gravure lorsqu'on grave la structure de guidage, en prévoyant une largeur de zone sensiblement égale à la différence entre celle que l'on veut finalement obtenir et la valeur estimée de la sur-gravure.

De plus, lorsque cette sur-gravure n'est pas la même pour toutes les couches de la structure de guidage, en particulier au niveau de l'interface de celle-ci, par exemple dans le cas d'une structure de type SiO₂/Si₃N₄/SiO₂, il convient également, pour ne pas gêner la connexion fibre/structure intégrée, de protéger totalement ou partiellement cet interface.

Pour ce faire, on peut réaliser la structure intégrée de façon que son superstrat, en SiO₂ dans l'exemple ci-dessus, recouvre complètement le coeur de la structure intégrée et graver la structure de guidage de façon à laisser une faible épaisseur de superstrat devant le coeur.

Le procédé objet de l'invention est tout à fait compatible avec d'autres procédés technologiques que l'on est susceptible de mettre en oeuvre, entre autres pour réaliser la structure intégrée optique et d'autres composants optiques.

Selon un mode de mise en oeuvre particulier du procédé objet de l'invention, le substrat de la structure intégrée est en silicium et gravé par gravure ionique réactive, en utilisant en tant que masque la structure de guidage précédemment gravée (et dont les matériaux constitutifs sont choisis pour qu'elle puisse jouer ce rôle de masque).

On utilise donc une gravure par voie sèche de type avantageusement isotrope conduisant à un logement sensiblement en forme de U à branches latérales concaves et non pas à un logement en forme V.

On notera que, dans la présente invention, compte tenu du fait que le substrat est gravé par voie sèche, on n'a pas de problème d'orientation comme il s'en produirait dans le cas d'une connexion entre une fibre optique et un microguide optique, si la fibre était placée dans un logement en V réalisé dans un substrat en silicium par attaque chimique préférentielle du silicium et si le microguide était lui-même réalisé au préalable sur ce substrat.

En effet, dans un tel substrat, la direction du logement en V serait imposée par la direction des plans cristallins de type 111.

Par conséquent, il ne pourrait y avoir que deux orientations relatives possibles du logement en V par rapport au microguide, ces deux orientations étant perpendiculaires l'une à l'autre.

Le mode de réalisation particulier mentionné plus haut ne présente pas un tel inconvénient puisqu'il utilise une gravure ionique réactive du substrat.

Cette gravure ionique réactive peut être par exemple effectuée à l'aide d'un plasma micro-ondes.

Dans une réalisation particulière de l'invention, le substrat est en silicium, les milieux adjacents au coeur sont des couches de silice non intentionnellement dopée et le coeur est en silice dopée.

Dans une autre réalisation particulière, le substrat est en silicium, les milieux adjacents au coeur sont des couchés de silice non intentionnellement dopée et le coeur est en nitrure de silicium ou en oxynitrure de silicium.

Dans la présente invention, le logement formé dans le substrat de la structure intégrée ne sert qu'au positionnement en profondeur, ou positionnement vertical, de la fibre optique. La profondeur de ce logement est choisi en conséquence, de façon à permettre sensiblement la coincidence des axes respectifs du coeur de la fibre optique et du coeur de la structure intégrée en projection sur un plan perpendiculaire à la surface de la structure intégrée.

Le positionnement latéral de la fibre optique est assuré par la structure de guidage ou, plus exactement, par les parois latérales de celle-ci, qui apparaissent lorsqu'on élimine ladite zone de cette structure de guidage, la distance entre ces parois (largeur de la zone éliminée) pouvant être égale au diamètre extérieur de la fibre optique.

Lorsque les milieux qui encadrent le coeur de la structure sont des couches de silice, l'épaisseur totale de ces couches de silice (hauteur des parois latérales de la structure de guidage) peut être de l'ordre de 15 à 30 micromètres.

Une telle hauteur est suffisante pour assurer le positionnement latéral de la fibre optique.

Afin d'améliorer le positionnement relatif de la fibre optique et de la structure, on peut procéder conformément à la revendication 8.

Afin de remédier à un problème de désalignement entre la fibre optique et la structure, qui risque d'apparaître lorsque la fibre optique est trop près du coeur de la structure, on peut graver la structure de guidage de façon à dégager de cette structure une languette qui admet comme ligne médiane l'axe du coeur de cette structure et dont la largeur est au plus égale à la profondeur du logement formé dans le substrat.

De façon avantageuse, la longueur de la languette est au moins égale à la profondeur du logement.

Un matériau adaptateur d'indice est de préférence disposé à l'interface fibre-structure pour améliorer le rendement de couplage entre cette fibre et cette structure.

L'invention concerne aussi un procédé de connexion entre une fibre optique et une structure de guidage intégrée à confinement latéral conformément à la revendication 13.

Ce dernier procédé particulier présente l'avantage de définir les points d'appui latéraux de la fibre dans la structure de guidage avec le même niveau de masque que celui ayant permis la réalisation du coeur de la structure (points d'appui latéraux espacés de W). De cette façon, le plan médian à l'axe reliant les points d'appui latéraux contient à la fois l'axe de la fibre et celui du coeur de la structure.

De préférence, la structure de guidage est gravée de façon sensiblement anisotrope.

De préférence, également, la gravure par voie sèche de ladite partie du substrat est de type isotrope.

On rappelle ci-après diverses notions en prenant l'exemple du silicium.

Une gravure anisotrope chimique (ou gravure anisotrope humide) du silicium s'arrête sur les plans 111. Elle ne peut être mise en oeuvre pour faire des V (à partir de plans 100) ou des U (à partir de plans 110) que sur 2 directions parallèles ou perpendiculaires qui sont les traces des plans de type 111.

Une gravure anisotrope sèche (par opposition à humide) de Si est utilisée dans l'invention.

Une gravure isotrope chimique (ou gravure isotrope humide) de Si est indépendante des directions cristallines et peut être mise en oeuvre avec les mêmes avantages que la gravure isotrope sèche mais est plus délicate à mettre en oeuvre.

Une gravure isotrope sèche (par opposition à humide) de Si est de préférence utilisée dans l'invention et elle est indépendante des directions cristallines. Elle nécessite des points d'appui latéraux pour le positionnement latéral d'une fibre : dans l'invention on utilise pour ce faire les murs en silice surmontant le substrat en Si gravé. La profondeur de gravure est controlable in situ pendant la gravure de Si pour le positionnement vertical de la fibre.

La présente invention sera mieux comprise à la lecture de la description d'exemples de réalisation donnés ci-après à titre purement indicatif et nullement limitatif en faisant référence aux dessins annexés sur lesquels :
- la figure 1 montre les variations du rendement de couplage entre une fibre optique et un microguide optique particuliers en fonction du désalignement de ces derniers et a déjà été décrite,
- la figure 2 montre les variations du rendement de couplage entre une fibre optique et un microguide optique particuliers en fonction de la distance entre ces derniers et a déjà été décrite,
- la figure 3 illustre schématiquement un procédé connu de connexion entre une fibre optique et un microguide optique et a déjà été décrite,
- la figure 4 illustre schématiquement un autre procédé connu de connexion entre une fibre optique et un microguide optique et a déjà été décrite,
- la figure 5 représente schématiquement un microguide optique que l'on veut connecter à une fibre optique conformément à la présente invention,
- les figure 6 et 7 illustrent schématiquement différentes étapes d'un procédé de connexion conforme à la présente invention,
- les figures 7A et 7B illustrent schématiquement un problème d'attaque différentielle du microguide, susceptible de se poser lors de sur-gravures se produisant au cours de la mise en oeuvre de ce procédé, le microguide étant représenté en coupe dans un plan contenant l'axe de son coeur,
- les figures 7C à 7E illustrent schématiquement une façon de résoudre ce problème, le microguide étant encore représenté en coupe dans un plan contenant l'axe de son coeur,
- la figure 8 illustre schématiquement d'autres étapes du procédé illustré par les figures 6 et 7,
- la figure 9 illustre schématiquement une variante de ce procédé,
- la figure 10 montre un alignement correct du coeur d'une fibre optique et du coeur d'un microguide optique, alignement qui a été obtenu conformément à la présente invention,
- la figure 11 illustre schématiquement le désalignement qui est susceptible d'apparaître entre la fibre et le microguide lorsque la fibre est trop près du coeur de ce microguide,
- les figures 12 à 14 illustrent schématiquement un procédé conforme à la présente invention, permettant de remédier à cet inconvénient, et
- les figures 15 à 20 illustrent schématiquement différentes étapes d'un autre procédé conforme à l'invention.

On décrit ci-après un mode de mise en oeuvre particulier du procédé objet de l'invention.

Il s'agit de connecter une fibre optique à un microguide optique 22 formé à partir d'une structure de guidage disposée sur un substrat 26.

La structure de guidage comprend (voir figure 5) une couche 28 qui se trouve sur le substrat 26 et une autre couche 30 qui est sur la couche 28 et, entre les couches 28 et 30, le coeur rectiligne 32 du microguide dont l'indice de réfraction est supérieur à l'indice de réfraction de la couche 28 et à l'indice de réfraction de la couche 30.

A titre purement indicatif et nullement limitatif, le substrat 26 est en silicium, les couches 28 et 30 sont en silice non dopée intentionnellement et le coeur 32 est en silice dopée ou en nitrure de silicium ou encore en oxynitrure de silicium (SiOₓN_{y}).

La réalisation du microguide optique est connue dans l'état de la technique.

Pour réaliser la connexion entre la fibre optique et le microguide optique, on commence par supprimer une partie de la structure de guidage comme on le voit sur la figure 6, la zone ainsi supprimée admettant l'axe Z du coeur du microguide comme axe médian.

Comme on le voit sur la figure 6, cette zone s'étend à partir d'un bord du microguide 22 et a, en vue de dessus, une forme sensiblement rectangulaire.

Pour supprimer cette zone, on grave la structure de guidage à travers un masque approprié 34 que l'on forme au préalable sur la couche 30.

Il s'agit d'une gravure sélective, par laquelle les couches 28 et 30 et le coeur 32 sont éliminés dans ladite zone mais la partie du substrat 26 située au-dessous de cette zone reste sensiblement intacte.

A titre purement indicatif et nullement limitatif, avec un substrat en silicium, des couches 28 et 30 en silice et un coeur 32 en silice ou en nitrure de silicium ou encore en oxynitrure de silicium, on peut utiliser un masque de résine tricouche ou un masque en silicium amorphe ou encore un masque en nickel-chrome et l'on peut utiliser une gravure sèche sensiblement anisotrope de type plasma avec un gaz réactif à base de fluor, tel que C₂F₆, CHF₃ ou CF₄.

Aprés avoir gravé la structure de guidage, le masque est soit éliminé soit conservé sur cette structure, notamment dans le cas d'un masque en résine.

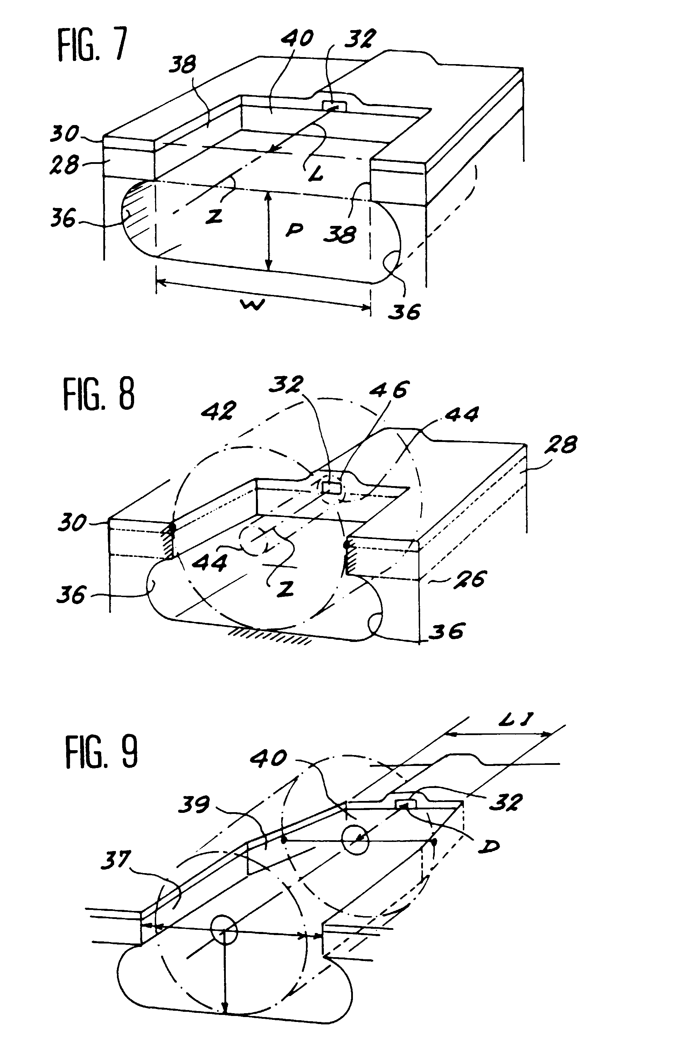

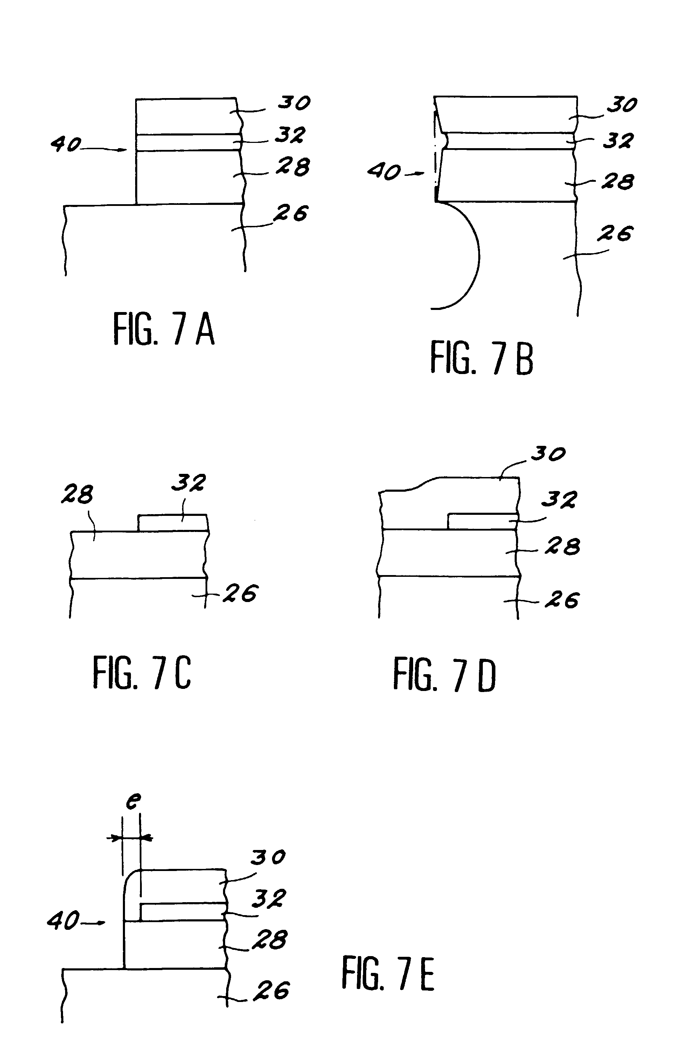

Après avoir gravé la structure de guidage, on forme dans le subtrat 26, en dessous de la zone de cette structure qui a été éliminée, un logement 36 (voir figure 7) dont la section transversale, par un plan perpendiculaire à l'axe du coeur du microguide, a sensiblement la forme d'un U à branches latérales concaves dans l'exemple représenté, et qui admet, comme plan de symétrie, le plan contenant l'axe du coeur du microguide et perpendiculaire aux couches 28 et 30.

A titre purement indicatif et nullement limitatif, avec le substrat en silicium mentionné plus haut, des couches 28 et 30 en silice et un coeur également en silice ou en nitrure de silicium ou encore en oxynitrure de silicium, on utilise la structure de guidage précédemment gravée en tant que masque et l'on effectue une gravure sèche isotrope du substrat, telle qu'une gravure ionique réactive utilisant des micro-ondes et un gaz réactif à base de fluor, par exemple le mélange SF₆ + O₂, les puissances électromagnétiques mises en jeu étant comprises entre 200 W et 1000 W.

Il convient de réaliser le logement 36 dans le substrat avec une profondeur aussi précise que possible, cette profondeur étant de préférence définie à moins d'un micromètre prés.

Pour ce faire deux techniques sont utilisables.

Une première technique consiste à contrôler le temps de gravure après avoir étalonné avec précision la vitesse de gravure.

On obtient ainsi des précisions de gravure de l'ordre de 0,5 micromètre à 1 micromètre sur une profondeur de 60 micromètres.

Une autre technique consiste à effectuer un contrôle interférométrique in situ grâce à un interféromètre optique monté sur la machine servant à graver le substrat.

L'élimination de la zone de la structure de guidage fait apparaître sur cette dernière des parois latérales 38 et une paroi d'interface 40 sur laquelle se trouve l'extrémité du coeur 32 du microguide.

En revenant à la zone de la structure de guidage que l'on a éliminée, il convient que la longueur L de cette zone soit suffisante pour que la fibre puisse être convenablement maintenue dans le logement 36. Cette longueur L peut être de l'ordre de 100 à 1000 micromètres.

La largeur W de cette zone est déterminée pour permettre un positionnement latéral de la fibre et est égale au diamètre extérieur de cette fibre (diamètre de la gaine optique -ou "cladding" selon la terminologie anglo-saxonne- de la fibre privée de sa gaine protectrice).

Une largeur W (distance entre les parois latérales 38) égale à ce diamètre extérieur permet, comme on l'a déjà vu, un positionnement non dynamique de la fibre optique.

Cette largeur W est essentiellement déterminée par les dimensions du masque 34 servant à graver la structure de guidage.

Ces dimensions doivent être calculées en tenant compte des diverses sur-gravures qui sont susceptibles de se produire ultérieurement, notamment lors de la gravure du substrat 26, et qui augmentent la largeur initiale W d'une valeur généralement comprise entre 2 et 4 micromètres suivant les procédés utilisés.

Les dimensions du masque 34 peuvent être déterminées à 0,5 micromètre près sans problème, cette précision étant largement suffisante pour la mise en oeuvre du procédé de connexion conforme à l'invention.

On notera que l'utilisation des couches 28 et 30, par exemple en silice, qui contiennent le coeur du microguide, pour le positionnement latéral de la fibre, facilite l'alignement entre cette fibre et le microguide lui-même.

On va maintenant expliquer comment tenir compte des sur-gravures à l'interface 40.

En effet, dans le cas d'un guide à structure non homogène (où les couches 28, 32 et 30 sont différentes), par exemple de type SiO₂/Si₃N₄/SiO₂ ou SiO₂/SiOₓN_{y}/SiO₂ sur un substrat de silicium (figure 7A), le coeur 32 peut être attaqué différemment du milieu environnant en silice lors de l'attaque du substrat 26 en silicium (figure 7B), ce qui peut éventuellement être gênant.

Pour remédier à cela, lors de la réalisation du microguide, on attaque la couche 32 destinée à former le coeur du microguide, au voisinage de l'interface 40 (figure 7C).

Ensuite, on recouvre complètement le coeur 32 par le superstrat 30 en SiO₂ (figure 7D).

Ainsi, lors de l'attaque des couches formées sur le substrat, attaque qui conduit à la formation de l'interface 40 (figure 7E), une épaisseur e de silice se trouve devant le coeur 32 et permet de remédier au problème de l'attaque différente du coeur, lors de l'attaque du substrat 26.

L'épaisseur e ne doit pas excéder 10 à 15 micromètres.

Cela ne pénalise guère l'efficacité du couplage et permet d'obtenir une interface homogène.

La profondeur P du logement 36 est choisie de façon qu'en plaçant une extrémité de la fibre optique dans ce logement, l'axe du coeur de cette fibre optique soit sensiblement en coincidence avec l'axe Z du coeur 32 du microguide.

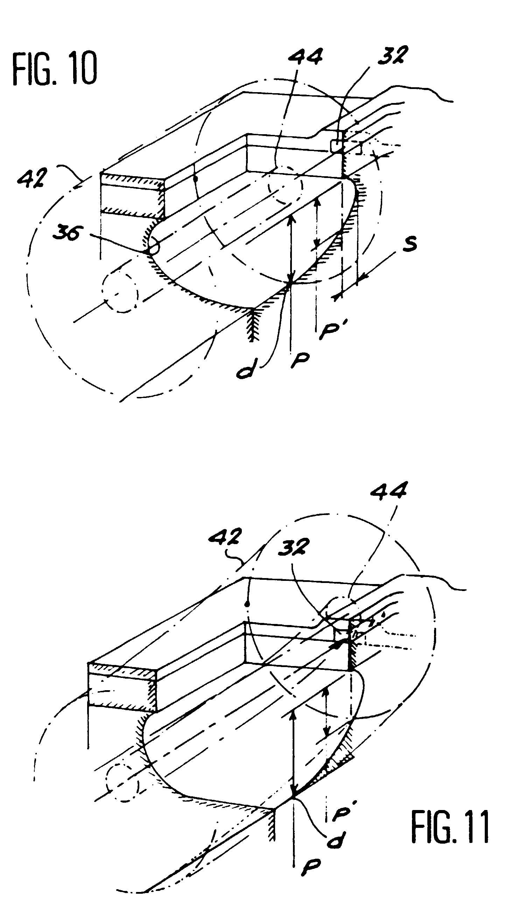

Lorsque la gravure du substrat conduisant à la formation du logement 36 est terminée, une extrémité de la fibre 42 (figure 8) est mise en place dans ce logement de telle façon qu'elle repose au fond de celui-ci.

La largeur W étant égale au diamètre extérieur de la fibre, le positionnement latéral de cette dernière est directement obtenu et le positionnement vertical de la fibre l'est également puisque la profondeur P du logement a été déterminée à cet effet, de sorte que l'axe du coeur 44 de l'extrémité de la fibre 42 et l'axe Z du coeur du microguide coïncident sensiblement.

La fixation de l'extrémité de la fibre dans le logement 36 peut être réalisée à l'aide d'une colle optique telle qu'une colle UV sensible aux rayonnements ultraviolets, par exemple du genre de la colle commercialisée par la société Nordland sous la référence NOA 61, colle dont un film est disposé sur la fibre après la émise en place de l'extrémité de la fibre optique 42 dans le logement 36.

En variante, la fixation de la fibre est réalisée par une soudure métallique, après avoir déposé des couches métalliques (eutectique ou Indium) dans le fond du logement 36 et à l'extrémité de la gaine optique de la fibre optique devant être en contact avec le fond du logement mais, bien entendu, pas sur la face d'extrémité de la fibre, face qui est destinée à se trouver en regard du coeur du microguide.

Dans le cas où une soudure métallique est utilisée, il faut tenir compte des épaisseurs des couches métalliques pour le dimensionnement du logement 36.

Pour améliorer le rendement du couplage entre la fibre et le microguide, on peut disposer un matériau adaptateur d'indices 46 à l'interface fibre-guide, par exemple sous forme d'un gel ou d'une colle appropriée, ce matériau étant par exemple injecté après positionnement mécanique de la fibre.

La distance D (figure 9) entre la fibre optique et le microguide optique n'est pas un paramètre critique dans une connexion bout à bout et une distance D de l'ordre de 10 à 20 micromètres est acceptable et ce, d'autant plus qu'on utilise le matériau adaptateur d'indice à l'interface fibre-guide (pour éliminer les pertes optiques dites pertes de FRESNEL).

Cette propriété de non-criticité est utilisable pour améliorer encore le positionnement relatif de la fibre optique par rapport au microguide optique en réalisant un masque 34 permettant d'éliminer, de la structure de guidage, une zone conduisant à des parois latérales 38 qui, du côté de la paroi d'interface 40, vont en se rapprochant l'une de l'autre lorsqu'on va vers cette paroi 40, comme on le voit sur la figure 9.

Plus précisément, chaque paroi latérale 38 comprend alors une première partie 37 qui est située du côté du bord de la structure et qui est parallèle à l'axe Z et une seconde partie 39 qui forme un angle aigu avec cet axe Z et se rapproche de ce dernier en allant vers la paroi d'interface 40.

Dans ce cas, on obtient une convergence analogue pour le logement 36 lorsqu'on a gravé le substrat 26 pour former ce logement.

On peut alors positionner l'extrémité de la fibre optique 42 en butée contre les parties 39 des parois latérales 38 de la structure.

On peut ainsi, sans dégrader la qualité du couplage entre la fibre et le microguide, rattraper une erreur de cote de +1 micromètre sur la largeur W de la zone éliminée, sans difficulté.

Avec un angle de l'ordre de 6° par exemple entre chaque partie 39 de paroi latérale et l'axe Z du coeur du microguide, ceci conduit à un positionnement idéal de la fibre par rapport au microguide, avec une distance D inférieure à 10 micromètres, pour une largeur d'interface LI du microguide égale à 125 micromètres et pour une fibre optique dont le diamètre extérieur de gaine optique est compris entre 125 et 127 micromètres, d'où une perte optique de l'ordre de 0,2 dB seulement.

En considérant un microguide dont le substrat 26 est en silicium et dont les couches 28 et 30 sont en silice, une gravure ionique réactive de ce substrat en silicium est très isotrope.

La sur-gravure S (sous les couches de silice - voir figure 10) est de l'ordre de 30 micromètres pour une profondeur P du logement de l'ordre de 60 micromètres (S étant, de façon générale, de l'ordre de P/2).

Cependant, à l'aplomb de la matière servant de masque pour cette gravure du substrat en silicium, la forme du logement conduit à une profondeur P' légèrement inférieure à P, comme on le voit sur la figure 10.

Ceci n'est pas gênant pour le positionnement d'une fibre optique dont la section transversale est circulaire et dont l'extrémité n'est pas placée trop près de l'extrémité du coeur du microguide, la mise en coïncidence de l'axe du coeur de cette extrémité de la fibre et de l'axe du coeur du microguide étant sensiblement obtenue comme on le souhaite.

Mais cette profondeur différente P' devient gênante lorsque l'extrémité de la fibre optique est rapprochée de l'extrémité du coeur du microguide.

En effet, à partir d'un point d (voir figure 11) l'extrémité de la fibre optique remonte légèrement en suivant la forme du logement et il se produit un désalignement à la fois angulaire et vertical entre l'axe du coeur de l'extrémité de la fibre optique et l'axe du coeur du microguide, d'où une diminution du couplage entre la fibre optique et le microguide optique.

Pour remédier à cet inconvénient, il faut rendre P' aussi voisin de P que possible et donc diminuer, au cours de la gravure du substrat, l'effet d'ombrage du masque servant à cette gravure.

Pour ce faire, on modifie la forme de la partie de la structure qui correspond à l'interface fibre-microguide.

Plus précisément, on fait en sorte que cette partie surplombe le fond du logement.

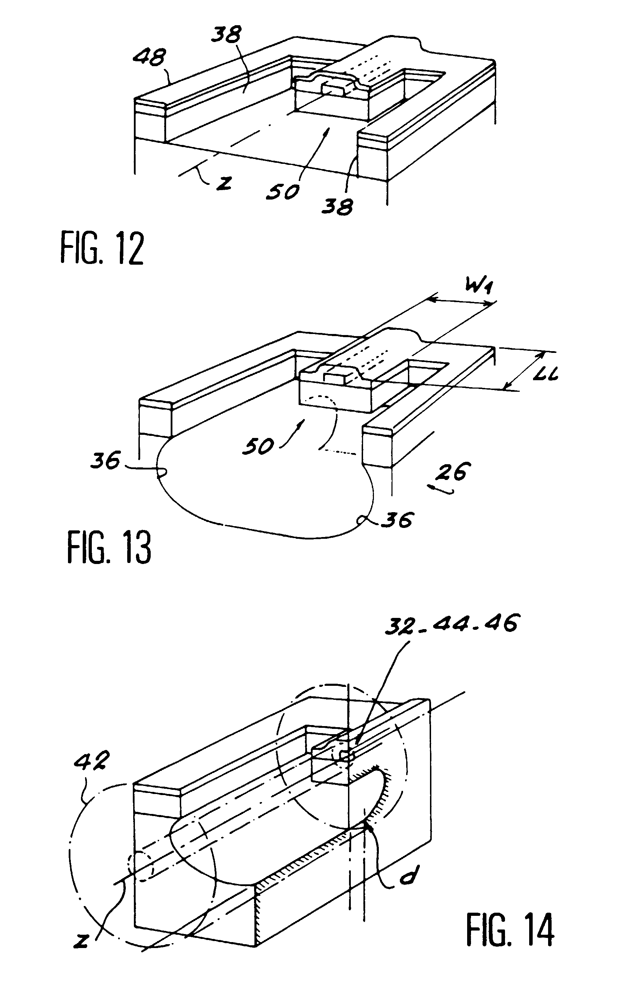

A cet effet, on grave la structure de guidage (figure 12) en utilisant un masque 48 dont la forme est choisie de façon à dégager une partie de la structure de guidage sous la forme d'une languette 50 dont l'axe médian est l'axe Z du coeur du microguide.

La languette 50 s'avance entre les parois latérales 38 de la structure lorsque cette dernière a été gravée à travers le masque 48.

On réalise ensuite une gravure sélective du substrat 26 (figure 13) sous la languette 50 et sous la zone de structure de guidage précédemment gravée, de manière à dégager cette languette 50.

Ainsi la languette se trouve en surplomb au-dessus du fond du logement résultant de la gravure du substrat.

En formant une languette dont la longueur LL est au moins égale à la profondeur P du logement formé dans le substrat et dont la largeur W1 est au plus égale à cette profondeur P, la gravure du substrat (attaque du silicium dans le cas d'un substrat en silicium), qui a lieu suivant les trois directions respectivement perpendiculaires aux trois faces libres de la languette, permet d'obtenir une distance d'aplomb P' très proche de P et donc de diminuer fortement le phénomène parasite de remontée de la fibre.

En pratique, pour des structures de microguides monomodes par exemple, on peut choisir pour LL une valeur de l'ordre de 60 à 100 micromètres et pour w1, une valeur de l'ordre de 20 à 30 micromètres.

Une fois la languette réalisée, on fixe comme précédemment l'extrémité de la fibre optique 42 (figure 14) dans le logement formé dans le substrat de façon que la face d'extrémité de la fibre soit en regard de la face d'extrémité de la languette 50 et que l'axe du coeur de cette extrémité de fibre coïncide sensiblement avec l'axe Z du coeur du microguide qui se trouve dans la languette.

La présente invention peut être mise en oeuvre avec une structure de guidage formée sur un substrat en silicium et comprenant une couche 28 en silice dont l'épaisseur est comprise entre 2 et 15 micromètres, une couche 30 en silice dont l'épaisseur est comprise entre 5 et 10 micromètres et un coeur 32 en nitrure de silicium dont l'épaisseur est comprise entre 0,1 et 0,2 micromètre.

L'invention peut également être mise en oeuvre avec une structure de guidage formée sur un substrat en silicium et comprenant une couche 28 en silice dont l'épaisseur est comprise entre 6 et 12 micromètres, une couche 30 en silice dont l'épaisseur est comprise entre 2 et 10 micromètres et un coeur 32 en silice dopée dont l'épaisseur est comprise entre 2 et 6 micromètres.

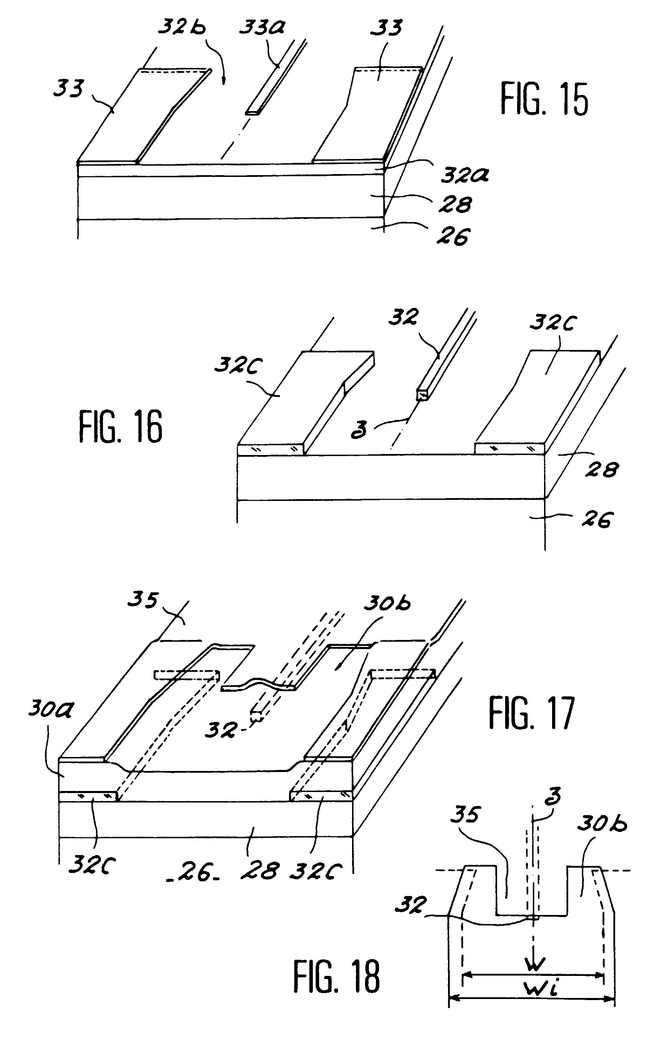

On explique ci-après un autre mode de mise en oeuvre particulier de l'invention en faisant référence aux figures 15 à 20. On rappelle d'abord que la structure de la figure 5 est classiquement réalisé de la façon suivante : on forme la couche 28 sur le substrat 26 en Si ; on forme, sur la couche 28 une couche intermédiaire à partir de laquelle le coeur 32 sera formé ; on forme un premier masque sur cette couche intermédiaire ; ce masque est gravé pour permettre de former le coeur 32 ; la couche intermédiaire est gravée à travers ce masque d'où le coeur 32 ; le premier masque est enlevé ; la couche 30 est déposée, d'où la structure de la figure 5. Un procédé conforme à l'invention peut alors être mis en oeuvre (figures 6 à 8). Cependant un problème se pose : l'ouverture de la structure de guidage (silice) se fait à l'aide d'un deuxième niveau de masque 34 différent du premier masque qui a permis de réaliser le coeur 32 du microguide. Pour avoir une bonne connexion fibre/microguide, il faut que l'axe du coeur du microguide soit confondu avec l'axe de l'ouverture de la silice. Or ce n'est pas le cas dans la pratique. Ceci est dû à des problèmes d'alignement des deux niveaux de masque, en particulier à cause de la topographie (creux et bosses de plusieurs micromètres).

Pour résoudre le problème et avoir un meilleur alignement, on procède comme indiqué ci-aprés, dans l'exemple illustré par les figures 15 à 20.

On forme la couche 28 (couche tampon) sur le substrat 26 en Si (figure 15). On forme sur la couche 28 une couche intermédiaire 32a destinée à la formation du coeur 32 du microguide. On dépose un matériel de masquage 33 sur la couche 32a. Ce matériau 33 (résine tricouche ou métal ou Si amorphe, par exemple) est prévu pour permettre une gravure sèche de la couche 32a en silice.

Le matériau 33 est ensuite gravé de manière à subsister au-dessus de la zone correspondant au coeur du microguide et à laisser apparaître une zone 32b de la couche 32a, cette zone 32b ayant une largeur W et admettant l'axe Z du coeur 32, ultérieurement formé, comme axe médian.

On grave ensuite avantageusement de façon sensiblement anisotrope la couche 32a à travers le masque réalisé. On obtient ainsi, après enlèvement ce dernier, le coeur 32 du microguide et de part t d'autre de celui-ci deux parties 32c de silice qui subsistent et sont symétriques l'une de l'autre par rapport à l'axe z (figure 16). On a ainsi formé le premier niveau d'ouverture de la silice, qui va "prédéfinir" le positionnement de la fibre optique.

On forme ensuite, sur la structure résultante, une couche de recouvrement 30a en silice (figure 17), homologue de la couche 30 de la figure 5.

On dépose ensuite sur la couche 30a, le deuxième matériau de masquage 35 qui est relatif à la gravure sèche ultérieure des couches 28 et 30a en silice (figures 17 et 18). Ce matériau 35 est ensuite gravé comme on le voit sur les figures 17 et 18, en tenant compte de l'incertitude de superposition des masques : la zone 30b qui apparaît à la suite de la gravure du matériau 35 admet sensiblement, en vue de dessus, l'axe z comme axe médian mais la largeur Wi de cette zone 30b est supérieure à W, la différence (Wi-W)/2 étant au moins égale à cette incertitude qui est d'ordre technologique. Par exemple, si la superposition est réalisable à 1 micromètre prés, ou choisit alors Wi-W au moins égal à 2 micromètres, par exemple 2,5 micromètres.

On indique à ce propos que la largeur W est, dans l'exemple décrit en faisant référence aux figures 15 à 20, égale à une largeur déterminée à la fois par le diamètre de la fibre et par l'épaisseur des couches 28 et 30.

On voit sur les figures 17 et 18 que la gravure du matériau 35 est également prévue, dans l'exemple représenté, pour obtenir, après gravure de la structure de guidage puis du substrat, une languette du genre de la languette 50 de la figure 13.

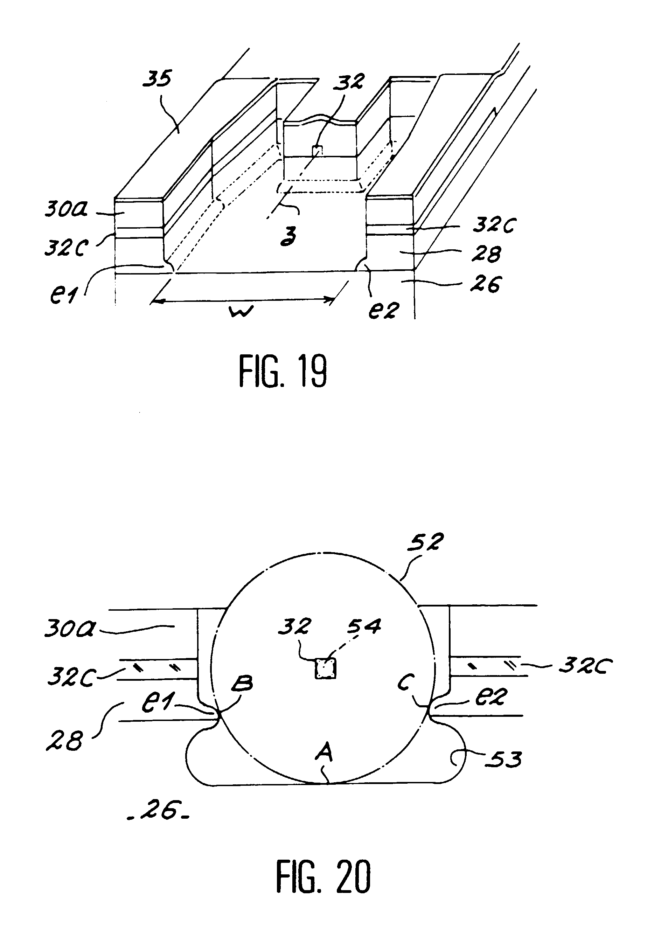

On grave ensuite, de façon sensiblement anisotrope, les couches 28 et 30a, jusqu'au substrat 26, à travers le deuxième masque obtenu par gravure des matériau 35. Ce deuxième masque est ensuite enlevé. On notera que des épaulements e1 et e2 sont créés sur les flancs de la couche 28, au bas de celle-ci, à la suite de la gravure des couches 28 et 30a (figure 19). L'axe médian de ces épaulements est toujours confondu, en vue de dessus, avec l'axe z du microguide (alors que ce n'est pas forcément le cas pour l'axe médian du deuxième masque).

On grave ensuite de façon isotrope, par voie sèche, le substrat 26 puis on positionne la fibre optique 52 (figure 20) dans le logement 53 ainsi obtenu. La fibre 52 prend appui sur le fond du logement en sillon (points A) vu en coupe sur la figure 20, et aussi sur les extrémités B et C des épaulements. L'axe du coeur 54 de la fibre (choisie de façon que cet axe soit aussi l'axe de symétrie de la fibre à mieux que 0,2 micromètre) sera donc bien confondu avec l'axe z du microguide (bien entendu dans le cas où le positionnement vertical est exact), assurant ainsi un excellent alignement.

## Revendications

1. Procédé de connexion entre une fibre optique (42) et une structure de guidage intégrée à confinement latéral (22) comprenant, sur un substrat (26), un coeur (32) situé entre deux milieux (28, 30) dont les indices de réfraction respectifs sont inférieurs à celui du coeur, ledit procédé comprenant les étapes suivantes:
- on grave la structure de guidage (22) à partir d'une extrémité de celle-ci de façon à éliminer de cette structure une zone qui admet l'axe (Z) du coeur de la structure comme ligne médiane et qui est délimitée par des parois latérales sensiblement parallèles audit axe,
- on grave une partie du substrat (26), qui est située sous la zone de structure de guidage ainsi éliminée, sur une profondeur permettant de mettre sensiblement en coincidence l'axe (Z) du coeur (32) de la structure de guidage (22) et l'axe du coeur d'une extrémité de la fibre (42) à connecter lorsque cette extrémité de fibre est positionnée dans le logement (36) ainsi formé dans le substrat, et
- on fixe ladite extrémité de fibre optique dans ledit logement (36) après qu'elle y ait été positionnée, de façon à maintenir sensiblement ladite coincidence entre lesdits axes, ledit procédé étant caractérisé en ce que:
- la gravure de ladite partie de substrat située sous la zone de structure de guidage éliminée est effectuée par voie sèche, de façon à ce que que le logement formé présente un fond apte à constituer un appui inférieur pour ladite extrémité de fibre optique à connecter, ainsi que des faces latérales concaves transversalement en retrait des parois latérales délimitant ladite zone éliminée, et
- la gravure préalable de ladite zone de structure de guidage à éliminer est elle-même effectuée de manière que la largeur finale (W) de ladite zone éliminée soit égale au diamètre de la fibre optique, de façon à ce que les parois latérales de la zone ainsi éliminée soient aptes à former des appuis latéraux pour ladite extrémité de fibre à connecter.

2. Procédé selon la revendication 1, caractérisé en ce que la structure de guidage (22) est gravée de façon sensiblement anisotrope.

3. Procédé selon l'une quelconque des revendications 1 et 2, caractérisé en ce que la gravure par voie sèche de ladite partie du substrat est de type isotrope.

4. Procédé selon la revendication 3, caractérisé en ce que le substrat (26) est en silicium et en ce qu'il est gravé par gravure ionique réactive, en utilisant en tant que masque la structure de guidage précédemment gravée.

5. Procédé selon l'une quelconque des revendications 1 à 4, caractérisé en ce que le substrat (26) est en silicium, en ce que les milieux adjacents au coeur sont des couches (28, 30) de silice non intentionnellement dopée et en ce que le coeur (32) est en silice dopée.

6. Procédé selon l'une quelconque des revendications 1 à 4, caractérisé en ce que le substrat (26) est en silicium, en ce que les milieux adjacents au coeur sont des couches (28, 30) de silice non intentionnellement dopée et en ce que le coeur (32) est en nitrure de silicium où en oxynitrure de silicium.

7. Procédé selon l'une quelconque des revendications 5 et 6, caractérisé en ce que l'épaisseur totale des couches (28, 30) de silice est de l'ordre de 15 à 30 micromètres.

8. Procédé selon l'une quelconque des revendications 1 à 7, caractérisé en ce qu'on grave la structure de guidage et le substrat de façon que la zone éliminée de largeur constante se prolonge, du côté de l'interface fibre-structure de guidage par une zone éliminée additionnelle dont la largeur va en diminuant vers cette interface, de façon à rattraper une erreur éventuelle de cote sur la largeur de la zone éliminée principale.

9. Procédé selon l'une quelconque des revendications 1 à 8, caractérisé er ce qu'on grave la structure de guidage de façon à dégager de cette structure une languette (50) qui admet comme ligne médiane l'axe (Z) du coeur (32) de la structure et dont la largeur est au plus égale à la profondeur du logement formé dans le substrat.

10. Procédé selon la revendication 9, caractérisé en ce que la longueur de la languette (50) est au moins égale à la profondeur dudit logement.

11. Procédé selon l'une quelconque des revendications 1 à 10, caractérisé en ce que la structure de guidage comprend un superstrat (30) qui recouvre complètement le coeur (32) de cette structure de guidage et en ce que la structure de guidage est gravée de façon à laisser une faible épaisseur (e) de superstrat devant le coeur.

12. Procédé selon l'une quelconque des revendications 1 à 11, caractérisé en ce qu'un matériau adaptateur d'indice (46) est disposé à l'interface fibre-structure de guidage.

13. Procédé de connexion entre une fibre optique (42) et une structure de guidage intégrée à confinement latéral (22) comprenant, sur un substrat (26), un coeur (32) situé entre deux milieux (28, 30a) dont les indices de réfraction respectifs sont inférieurs à celui du coeur, ledit procédé comprenant les étapes suivantes:
- on forme l'un des milieux (28) sur le substrat (26),
- on forme, sur ce milieu formé sur le substrat, une couche intermédiaire (32a) à partir de laquelle le coeur (32) de la structure de guidage est ultérieurement produit,
- on grave la couche intermédiaire (32a) à partir d'une extrémité de celle-ci de façon à former le coeur (32) de la structure de guidage et à éliminer de cette couche intermédiaire une zone qui admet l'axe du coeur de la structure comme ligne médiane et dont la largeur W est choisie pour permettre le positionnement ultérieur de la fibre optique (52) en alignement avec le coeur de la structure de guidage,
- on forme, sur la structure résultant de cette gravure de la couche intermédiaire, une couche de recouvrement (30a) constituant l'autre milieu,
- on grave la structure de guidage résultante de façon à éliminer de cette structure de guidage une autre zone qui admet sensiblement l'axe du coeur de la structure de guidage comme ligne médiane et dont la largeur Wi, diminuée de la largeur W de la zone éliminée de la couche intermédiaire, est au moins égale au double de l'incertitude sur la superposition de ces zones, et de façon à former deux épaulements (e1,e2) au moins sur ledit milieu (28), ces deux épaulements étant aptes à former des surface d'appui latérales pour la fibre à connecter,
- on grave par voie sèche une partie du substrat, qui est située sous ladite autre zone ainsi éliminée de la structure de guidage, sur une profondeur permettant de mettre sensiblement en coïncidence l'axe (z) du coeur (32) de la structure de guidage et l'axe du coeur d'une extrémité de la fibre à connecter lorsque cette extrémité est positionnée dans le logement (53) ainsi formé dans le substrat, ladite gravure étant telle que ledit logement ainsi formé présente un fond apte à former un appui inférieur (A) pour ladite extrémité de fibre à connecter, et
- on fixe ladite extrémité de fibre optique dans ce logement (53), après qu'elle y ait été positionnée, de façon à maintenir sensiblement ladite coïncidence entre lesdits axes.

14. Procédé selon la revendication 13, caractérisé en ce que la structure de guidage est gravée de façon sensiblement anisotrope.

15. Procédé selon l'une quelconque des revendications 13 et 14, caractérisé en ce que la gravure par voie sèche de ladite partie du substrat est de type isotrope.

## Patentansprüche

1. Verbindungsmethode bzw. -verfahren zwischen einer optischen Faser (42) und einer integrierten Leiterstuktur mit seitlicher Einschließung (22), umfassend, auf einem Substrat (26), einen Kern (32), der sich zwischen zwei Medien (28, 30) befindet, deren jeweilige Brechzahlen kleiner als die des Kerns sind, wobei besagtes Verfahren die folgenden Schritte aufweist:
- man ätzt die Leiterstruktur (22), ausgehend von einem ihrer Enden, um von dieser Struktur eine Zone zu eliminieren, deren Mittellinie die Achse (Z) des Kerns der Struktur ist und die begrenzt wird durch Seitenwände, die im wesentlichen parallel sind zu besagter Achse,
- man ätzt einen Teil des sich unter der eliminierten Leiterstrukturzone befindenden Substrats (26) auf eine Tiefe, die ermöglicht, die Achse (Z) des Kerns (32) der Leiterstruktur (22) und die Achse des Kerns eines Endes der anzuschließenden Faser (42) im wesentlichen in Ubereinstimmung zu bringen, wenn dieses Faserende in dem derart in dem Substrat ausgebildeten Sitz (36) positioniert wird, und
- man befestigt genanntes Ende der optischen Faser in dem Sitz (36) nachdem es dort positioniert wurde, um besagte Übereinstimmung zwischen den genannten Achsen aufrechtzuerhalten,
wobei besagtes Verfahren **dadurch gekennzeichnet** ist, daß:
- die Ätzung des unter der eliminierten Leiterstrukturzone befindlichen Substrats auf trockenem Wege erfolgt, derart, daß der ausgebildete Sitz einen Boden aufweist, der eine untere Auflagefläche für besagtes Ende der anzuschließenden optischen Faser darstellt sowie konkave bzw. hohle Seitenflächen, in Querrichtung zurückweichend von den Seitenwänden, die besagte eliminierte Zone begrenzen, und
- die vorhergehende Atzung der zu eliminierenden Leiterstruktur wird selbst derart durchgeführt, daß die Endbreite (W) der besagten eliminierten Zone gleich dem Durchmesser der optischen Faser ist, so daß die Seitenwande der einmal eliminierten Zone fähig sind, seitliche Auflagen für besagtes anzuschließendes Faserende zu bilden.

2. Verfahren nach Anspruch 1, dadurch gekennzeichnet, daß die Leiterstruktur (22) auf im wesentlichen anisotrope Weise geätzt wird.

3. Verfahren nach einem der Ansprüche 1 und 2, dadurch gekennzeichnet, daß die Trockenätzung von besagtem Teil des Substrats vom isotropen Typ ist.

4. Verfahren nach Anspruch 3, dadurch gekennzeichnet, daß das Substrat (26) aus Silcium ist, und dadurch, daß es durch reaktives Ionenätzen geätzt wird, wobei die vorhergehend geätzte Leiterstruktur als Maske verwendet wird.

5. Verfahren nach einem der Ansprüche 1 bis 4, dadurch gekennzeichnet, daß das Substrat (26) aus Silicium ist, und dadurch, daß die dem Kern benachbarten Medien Schichten (28, 30) aus unabsichtlich dotiertem Siliciumdioxid sind, und dadurch, daß der Kern (32) aus dotiertem Siliciumdioxid ist.

6. Verfahren nach einem der Ansprüche 1 bis 4, dadurch gekennzeichnet, daß die dem Kern benachbarten Medien Schichten (28, 30) aus unabsichtlich dotiertem Siliciumdioxid sind, und dadurch, daß der Kern (32) aus Siliciumnitrid oder aus Siliciumoxinitrid ist.

7. Verfahren nach einem der Ansprüche 5 und 6, dadurch gekennzeichnet, daß die Gesamtdicke der Siliciumdioxid-Schichten (28, 30) in der Größenordnung von 15 bis 30 Mikrometer ist.

8. Verfahren nach einem der Ansprüche 1 bis 7, dadurch gekennzeichnet, daß man die Leiterstruktur und das Substrat derart ätzt, daß die eliminierte Zone konstanter Breite sich auf der Seite der Grenzfläche Faser-Leiterstruktur verlängert durch eine zusätzliche eliminierte Zone, die mit abnehmender Breite in Richtung dieser Grenzfläche geht, um einen eventuellen Maßfehler über die Breite der eliminierten Hauptzone auszugleichen bzw. zu beseitigen.

9. Verfahren nach einem der Ansprüche 1 bis 8, dadurch gekennzeichnet, daß man die Leiterstruktur derart ätzt, daß in dieser Struktur eine Zunge (50) freigelegt wird, deren Mittellinie die Achse (Z) des Kerns (32) der Struktur ist und deren Breite höchstens gleich der Tiefe des in dem Substrat ausgebildeten Sitzes ist.

10. Verfahren nach Anspruch 9, dadurch gekennzeichnet, daß die Länge der Zunge (50) wenigstens gleich der Tiefe des besagten Sitzes ist.

11. Verfahren nach einem der Ansprüche 1 bis 10, dadurch gekennzeichnet, daß die Leiterstruktur ein Superstrat (30) umfaßt, das den Kern (32) dieser Leiterstruktur vollständig überdeckt, und dadurch, daß die Leiterstruktur in einer Weise geätzt wird, die gegenüber dem Kern eine geringe Superstrat-Dicke (e) stehenläßt.

12. Verfahren nach einem der Ansprüche 1 bis 11, dadurch gekennzeichnet, daß ein Indexanpassungsmaterial (46) an der Grenzfläche Faser-Leiterstruktur angeordnet wird.

13. Verbindungsverfahren zwischen einer optischen Faser (42) und einer integrierten Leiterstruktur mit seitlicher Einschließung (22), umfassend, auf einem Substrat (26), einen Kern (32), zwischen zwei Medien (28, 30a) befindlich, deren jeweilige Brechzahlen kleiner sind als die des Kerns, wobei dieses Verfahren die folgenden Schritte umfaßt:
- man bildet eines der Medien (28) auf dem Substrat (26),
- man bildet auf diesem auf dem Substrat gebildeten Medium eine Zwischenschicht (32a), aus der der Kern der Leiterstruktur in der Folge hergestellt wird,
- man ätzt die Zwischenschicht (32a) von einem ihrer Enden aus, um den Kern (32) der Leiterstruktur zu bilden und von dieser Zwischenschicht eine Zone zu eliminieren, deren Mittellinie die Achse der Kerns der Stuktur ist und deren Breite W gewählt wird, damit sie die spätere Positionierung der optischen Faser (52) ermöglicht, so daß sie mit dem Kern der Leiterstruktur fluchtet,
- man bildet auf der aus dieser Ätzung resultierenden Struktur der Zwischenschicht eine Uberdeckungsschicht 30a, die das andere Medium bildet,
- man ätzt die resultierende Leiterstruktur, um von dieser resultierenden Leiterstruktur eine weitere Zone zu eliminieren, deren Mittellinie im wesentlichen die Achse des Kerns der Leiterstruktur ist und deren Breite Wi, verringert um die Breite W der eliminierten Zone der Zwischenschicht, wenigstens gleich dem Doppelten der Unsicherheit bzw. Unbestimmtheit bezuglich der Überlagerung dieser Zonen ist, und um wenigstens an besagtem Medium (28) zwei Schultern (el, e2) zu bilden, wobei diese beiden Schultern geeignet sind, seitliche Auflageflächen für die zu verbindende Faser zu bilden,
- man ätzt auf trockenem Wege einen Teil des Substrats, das sich unter der genannten weiteren aus der Leiterstruktur elimiminierten Zone befindet, auf eine Tiefe, die ermöglicht, die Achse (Z) des Kerns (32) der Leiterstruktur und die Achse des Kerns eines Endes der zu verbindenden Faser in Übereinstimmung zu bringen, wenn dieses Ende in dem so in dem Substrat ausgebildeten Sitz (53) positioniert wird, wobei besagte Ätzung derart ist, daß dieser Sitz einen Boden aufweist, der geeignet ist, eine untere Auflage (A) für das zu verbindende Faserende zu bilden,
- man befestigt das besagte Lichtleitfaserende, nachdem es positioniert worden ist, in diesem Sitz (53) derart, daß die genannte Übereinstimmung zwischen den besagten Achsen im wesentlichen aufrechterhalten wird.

14. Verfahren nach Anspruch 13, dadurch gekennzeichnet, daß die Leiterstruktur im wesentlichen anisotrop geätzt wird.

15. Verfahren nach einem der Ansprüche 13 und 14, dadurch gekennzeichnet, daß die Trockenatzung des besagten Teils des Substrats vom anisotropen Typ ist.

## Claims

1. Process for connection between an optical fibre (42) and an integrated guidance structure with lateral confinement (22) incorporating, on a substrate (26), a core (32) located between two media (28, 30), whose respective refractive indices are lower than that of the core, the process having the following stages:
the guidance structure (22) is etched from one end thereof in order to eliminate from said structure a zone admitting the axis (Z) of the core of the structure as the median line and which is defined by side walls substantially parallel to said axis,
etching a portion of the substrate (26) located beneath the thus eliminated guidance structure zone, over a depth permitting the bringing about of a substantial coincidence between the axis (Z) of the core (32) of the guidance structure (22) and the axis of the core of one end of the fibre (42) to be connected, when said fibre end is positioned in the recess (36) formed in this way in the substrate and
said optical fibre end is fixed in said recess (36) after it has been positioned in such a way as to essentially maintain said coincidence between the said axes, said process being characterized in that:
the etching of the substrate portion located beneath the eliminated guidance structure zone takes place by the dry route, so that the recess formed has a base able to form a lower support for said optical fibre end to be connected, as well as transversely concave lateral faces set back from the side walls defining said eliminated zone and
the prior etching of said guidance structure zone to be eliminated is performed in such a way that the final width (W) of said eliminated zone is equal to the diameter of the optical fibre, so that the side walls of the thus eliminated zone are able to form lateral supports for said fibre end to be connected.

2. Process according to claim 1, characterized in that the guidance structure (22) is etched substantially anisotropically.

3. Process according to one of the claims 1 and 2, characterized in that the dry etching of the portion of the substrate is isotropic.

4. Process according to claim 3, characterized in that the substrate (26) is of silicon and that it is etched by reactive ionic etching using as the mask the previously etched guidance structure.

5. Process according to any one of the claims 1 to 4, characterized in that the substrate (26) is of silicon, in that the media adjacent to the core are not intentionally doped silica layers (28, 30) and that the core (32) is of doped silica.

6. Process according to one of the claims 1 to 4, characterized in that the substrate (26) is of silicon, in that the media adjacent to the core are not intentionally doped silica layers (28, 30) and in that the core (32) is of silicon nitride or silicon oxynitride.

7. Process according to one of the claims 5 and 6, characterized in that the total thickness of the silica layers (28, 30) is approximately 15 to 30 micrometres.

8. Process according to one of the claims 1 to 7, characterized in that etching takes place of the guidance structure and the substrate in such a way that the constant width eliminated zone is extended on the side of the fibre-guidance structure interface by an additional eliminated zone, whose width decreases towards said interface, so as to make good a possible dimensional error on the width of the main eliminated zone.

9. Process according to one of the claims 1 to 8, characterized in that the guidance structure is etched in such a way as to free from said structure a tongue (50), which admits as the median line the axis (Z) of the core (32) of the structure and whose width is at the most equal to the depth of the recess formed in the substrate.

10. Process according to claim 9, characterized in that the width of the tongue (50) is at least equal to the depth of said recess.

11. Process according to one of the claims 1 to 10, characterized in that the guidance structure comprises a superstrate (30) completely covering the core (32) of said guidance structure and in that the guidance structure is etched so as to leave a small superstrate thickness (e) in front of the core.

12. Process according to one of the claims 1 to 11, characterized in that an index adapting material (46) is located at the fibre-guidance structure interface.

13. Process for connection between an optical fibre (42) and an integrated guidance structure with lateral confinement (22) having, on a substrate (26), a core (32) located between two media (28, 30a), whose respective refractive indices are below that of the core, said process comprising the following stages:
one of the media (28) is formed on the substrate (26),
on said medium formed on the substrate, is formed an intermediate layer (32a) from which the core (32) of the guidance structure is subsequently produced, the intermediate layer (32a) is etched from one end thereof, so as to form the core (32) of the guidance structure and from said intermediate layer is eliminated a zone admitting the axis of the core of the structure as the median line and whose width (W) is chosen so as to permit the subsequent positioning of the optical fibre (52) in alignment with the core of the guidance structure,
on the structure resulting from said etching of the intermediate layer is formed a covering or overlap layer (30a) constituting the other medium, the resulting guidance structure is etched, so as to eliminate from said guidance structure another zone substantially admitting the axis of the guidance structure core as the median line and whose width (Wᵢ), decreased by the width (W) of the eliminated zone of the intermediate layer, is at least equal to double the uncertainty on the superimposing of these zones, so as to form two shoulders (E1, E2), at least on said medium (28), said two shoulders being able to form support surfaces for the lateral fibres to be connected,
etching takes place by the dry route of a portion of the substrate located beneath said other zone eliminated in this way from the guidance structure, over a depth making it possible to substantially bring about coincidence between the axis (z) of the core (320 of the guidance structure and the axis of the core of one end of the fibre to be connected, one said end is positioned in the thus formed recess (53) in the substrate and said etching being such that the thus formed recess has a base able to form a lower support (A) for said fibre end to be connected and
said optical fibre end is fixed in the recess (53) after it has been positioned in such a way as to substantially maintain said coincidence between said axes.

14. Process according to claim 13, characterized in that the guidance structure is substantially anisotropically etched.

15. Process according to one of the claims 13 and 14, characterized in that the dry etching of said substrate portion is isotropic.
